# EUROPEAN PATENT SPECIFICATION

(11) **EP 1 721 398 B1**
(45) Date of publication and mention of the grant of the patent: **14.05.2008**
(21) Application number: 05729844.0
(22) Date of filing: 03.03.2005
(51) Int. Cl.: H04B 10/17

(54) **OPTICAL ADD/DROP AMPLIFICATION DEVICE**
OPTISCHE EIN-/AUS-VERSTÄRKUNGSEINRICHTUNG
DISPOSITIF OPTIQUE D'AMPLIFICATION A INSERTION/EXTRACTION

(30) Priority: 05.03.2004 IT MI20040431
(43) Date of publication of application: 15.11.2006
(73) Proprietor: Ericsson AB, 164 80 Stockholm (SE)
(72) Inventor: MAGRI, Roberto, I-43100 Parma (IT); COSTANTINI, Matteo, I-43100 Parma (IT)
(74) Representative: Parkinson, Neil Scott
(86) International application number: PCT/EP2005/050955
(87) International publication number: WO 2005/091535

(56) References cited:
- EP-A- 0 506 163
- WO-A-02/080409
- JP-A- 2002 353 939

## Description

This invention relates to a optical add/drop amplification devices for use in wavelength division multiplex (WDM) optical fibre telecommunications system, and to a method of ensuring survival of optical channels added at such an optical add/drop amplification device.

As is known optical add/drop amplification devices (nodes) are sited at the interconnection of fibre spans within WDM optical telecommunications system and enable optical channels to be added to or dropped from the optical fibre span, and amplify the on-going WDM optical channels (through channels) to restore their power for transmission along the next span. Optical channels are added/dropped with the device using an optical add/drop multiplexer (OADM) device.

Typically, such amplication devices include an output (or booster) optical amplifier arranged in a constant power mode, that is there is no change in output power regardless of any input power change. A constant power mode can be achieved by monitoring the output power of the optical amplifier, for example with a photodiode and using a feedback loop such that output power fluctuations are used as an error signal for an optical pump of the optical amplifier.

In the event of a break in the fibre span leading to the interconnection (that is upstream of the device), this can cause a problem if measures are not taken, since the only channels reaching the output amplifier will be the optical channels added at the device, and these would be amplified excessively in an attempt to maintain constant output power. In turn this would overload optical amplifiers at subsequent interconnections (i.e. traffic card receivers) downstream of the device and cause non-linear distortion during propagation due to high transmitted power.

An example of one measure taken to avoid this problem is disclosed in International patent application, publication number WO02080409, in which the add/drop amplification device includes an input optical amplifier (or pre-amplifier) that is also operated in a constant power mode. The input amplifier which is located before the OADM device, amplifies Amplified Spontaneous Emission (ASE) noise to compensate for the power of the channels lost due to the fibre span breakage, so that the input presented to the output amplifier is constant power.

However, this compensation is ineffective in the event that the input amplifier itself fails. The present invention has arisen in an endeavour to at least in part overcome the limitations of the known optical amplification devices.

According to the present invention there is provided an optical add/drop amplification device for arrangement between fibre spans in an optical telecommunications system, which comprises: a first input amplifier; a channel add/drop device coupled to the first input amplifier; an output amplifier coupled to the channel add/drop device, wherein the input amplifier is arranged to produce substantially constant output power, such that the output power of amplified spontaneous emission (ASE) noise compensates in use for loss of signal power in the event of breakage of a fibre span, to ensure survival of any channels added at the add/drop device, the device being characterised by an additional input amplifier which is arranged to provide the compensating amplified spontaneous emission noise in the event of failure of the first input amplifier. The invention ensures the survival of added channels even in the event of breakage of the fibre span and/or a failure of the first input amplifier.

Advantageously the additional input amplifier is connected to the first input amplifier, and is arranged to operate in response to failure of the first input amplifier. Preferably the additional input amplifier is arranged to switch on when it fails to detect any optical power from the first input amplifier. When the first input amplifier includes a monitor output a photodiode of the additional input amplifier is advantageously arranged to sense light from the monitor output of the first input amplifier.

Advantageously the output power of the additional input amplifier is set so that when it is switched on, it will give the same output power as that previously produced by the first input amplifier and arranged to produce a substantially constant output power.

According to a second aspect of the invention there is provided a method of ensuring survival of channels added at an optical add/drop amplification device arranged between fibre spans in an optical telecommunications system, in which amplified spontaneous emission (ASE) noise produced in an input amplifier of the amplification device is used to compensate for loss of signal power in the event of breakage of a fibre span, to ensure survival of any channels added at the add/drop device, and characterised by producing the compensating noise in an additional input amplifier in the event of failure of the input amplifier. The method of the invention ensures the survival of added channels even in the event of breakage of the fibre span and/or a failure of the input amplifier.

Advantageously the method further comprises the additional input amplifier sensing light from the monitor output of the input amplifier.

An optical add/drop amplification device constructed in accordance with the invention will now be described in detail, by way of example only, with reference to the accompanying drawings, in which:
Figure 1 is a block diagram of the device;
Figure 2 shows graphs of the output of a first input amplifier and an additional input amplifier;
Figure 3 shows a graph of a surviving added channel; and
Figure 4 is a block diagram showing part of the device shown in Figure 1 in greater detail.

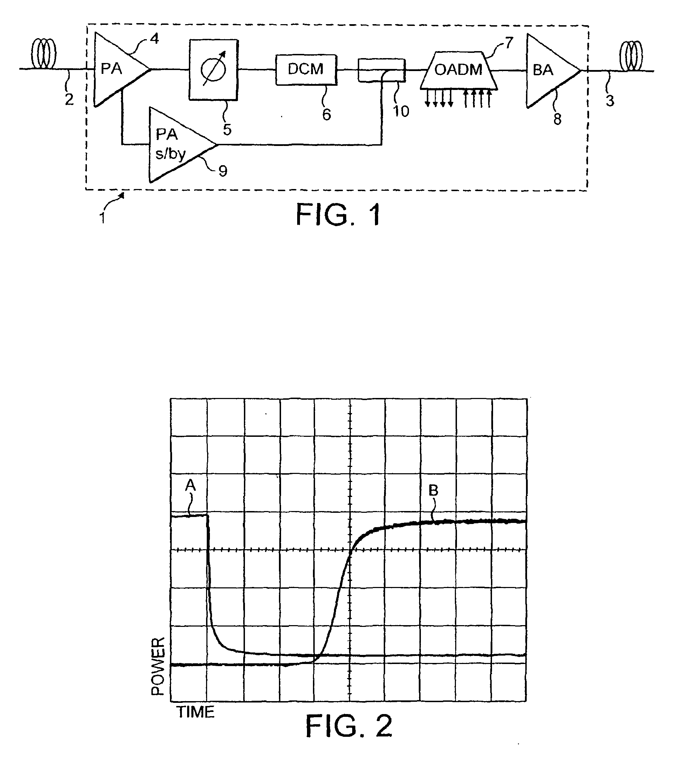

Referring to Figure 1 there is shown an optical add/drop amplification device (or optical add/drop node) indicated by the reference numeral 1 and shown within a dashed line box for interconnecting two optical fibre spans 2, 3 in a WDM optical fibre communications network. The communications network can for example comprise a ring network in which the nodes 1 are connected serially to form a closed ring or as part of another network architecture. The device 1 comprises, serially connected between an input and output of the device, an input optical amplifier (or pre-amplifier) 4, an optical attenuator 5 (which is optional and can be fixed or variable attenuation), a dispersion compensating module (DCM) 6 (which is used to compensate chromatic dispersion accumulated along the transmission fibre, and which is also optional), an optical add/drop multiplexer (OADM) device 7 and an output (or booster) optical amplifier 8. The input and output optical amplifiers comprise for example an erbium doped fibre amplifier (EDFA) and each is operated in a constant power mode using an feedback loop to control the amplifier pump power (the control loop is not illustrated in the figures as this is readily by those skilled in the art). The device described thus far is functionally the same as the system described in our earlier International Patent Application W002080409.

In one example given in that International patent publication, the signal entering the add/drop amplification device 1 consists of forty channels, some of which are dropped at OADM 7, while a single channel is added there. In the event of breakage of fibre span 2, a feedback mechanism replaces the lost power of the thirty-nine channels with ASE noise generated by the input optical amplifier 4, to maintain constant output power at the output of OADM 7. Thus the power of the added channel at the output of the output amplifier 8 remains the same after breakage as before, and the output amplifier 8 keeps on working at its nominal working point. It can be assumed that no power variation appears at the output of the output amplifier 8 since the ASE power is equivalent to the power of lost through channels.

The traffic-survivability solution described in the International Patent Application referred to will not however work in the event of failure of the input amplifier 4 itself. In such a case, in fact, no ASE noise would be output by this amplifier and the compensating effect is lost.

In accordance with the invention, an additional (or standby) input optical amplifier (or pre-amplifier) 9 is provided which protects the first (working) input amplifier 4 in the event of failure of the amplifier 4. The output of the standby input amplifier is coupled to the main optical path of the device upstream of the OADM 7 by an optical coupler 10. As shown the coupler is preferable located between the output of the DCM 6 and the input of the OADM 7. The coupler splitting-ratio is selected to take account of the different losses in the two branches.

The standby input amplifier 9 is configured to switch on automatically if the first input amplifier 4 fails. All the time the first input amplifier is operational the standby amplifier remains switched off. Automatic switching on of the standby input amplifier is conveniently achieved by connecting a monitor output port 12 of the first input amplifier 4 to the input of the standby input amplifier 9 with an optical patchcord.

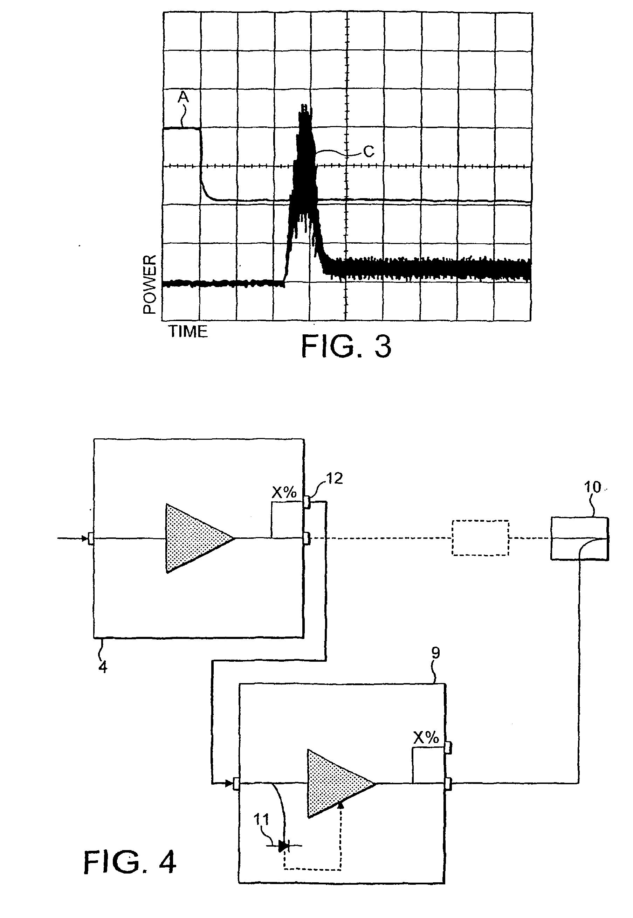

If in operation the first (main) input amplifier 4 fails, the standby input amplifier 9, which is switched off and monitors the output of the main input amplifier 4 using a monitor photodiode 11, starts and provides ASE noise at the input to the output amplifier 8 to guarantee survival of channels added at the OADM filter 7. Referring to Figure 4 the main input amplifier 4 has a monitor output 12 that outputs a small portion x% of the output optical power of the amplifier. This is connected to the input of the stand-by amplifier 9, which detects this output power using photodiode 11 and uses this output power as a switch. When the standby amplifier 9 no longer detects any optical input power, or the optical power falls below a predetermined threshold, the standby amplifier is switched on. This mode of optical power control both guarantees quick response and works with faults that affect the electronics of the input amplifier and prevent communication between the two. Since the standby input amplifier 9 needs only to output ASE noise, its design is much simplified compared to the main input amplifier 4 and its electronics is also simplified to allow a very fast switching-on and reduced cost. The standby input amplifier 9 works with an output power control loop in a constant power mode (the control loop is not shown in Figure 4 and is readily derivable by those skilled in the art). Its output power is set at the same value as the main input amplifier 4, so when it is switched on it will give the same output power as that previously given by the main input amplifier 4.

Figure 2 shows (A) and (B) the output powers of the first input amplifier 4 and the standby input amplifier 9, respectively, and illustrates the failure (A) of the main input amplifier 4 and the consequent fast switching on (B) of the standby input amplifier 9. Figure 3 shows (C) the surviving channel received power in comparison with (A) the output power of the main input amplifier 4. As it can be seen, the power variation occurs only during the fast transient, after this time the received power is restored to its operating value. Due to the fast switching (< 1 ms), the risk of damage to the transponders is avoided and the traffic is restored before any critical situation can arise.

## Claims

1. An optical add/drop amplification device (1) for arrangement between fibre spans (2, 3) in an optical telecommunications system, comprising: a first input amplifier (4); a channel add/drop device (7) coupled to the first input amplifier (4); an output amplifier (8) coupled to the channel add/drop device (7), the input amplifier (4) being arranged to produce substantially constant output power, such that the output power of amplified spontaneous emission noise compensates in use for loss of signal power in the event of breakage of a fibre span (2), to ensure survival of any channels added at the add/drop device, **characterised by** an additional input amplifier (9) which is arranged to provide the compensating amplified spontaneous emission in the event of failure of the first input amplifier (4).

2. An optical add/drop amplification device (1) as claimed in claim 1, in which the additional input amplifier (9) is connected to the first input amplifier (4), and is arranged to operate in response to failure of the first input amplifier.

3. An optical add/drop amplification device (1) as claimed in claim 2, in which the additional input amplifier (9) is arranged to switch on when it fails to detect any optical power from the first input amplifier (4).

4. An optical add/drop amplification device (1) as claimed in claim 3, in which a photodiode (11) of the additional input amplifier is arranged to sense light from the monitor output (12) of the first input amplifier (4).

5. An optical add/drop amplification device (1) as claimed in any one of claims 1 to 4, in which the output power of the additional input amplifier (9) is set so that when it is switched on, it will give the same output power as that previously produced by the first input amplifier (4) and arranged to produce a substantially constant output power.

6. A method of ensuring survival of channels added at an optical add/drop amplification device arranged between fibre spans in an optical telecommunications system, in which amplified spontaneous emission noise produced in an input amplifier of the amplification device is used to compensate for loss of signal power in the event of breakage of a fibre span, to ensure survival of any channels added at the add/drop device, **characterised by** producing the compensating noise in an additional input amplifier in the event of failure of the input amplifier.

7. A method of ensuring survival of channels as claimed in claim 6, and comprising the additional input amplifier sensing light from the monitor output of the input amplifier.

## Patentansprüche

1. Optische Add/Drop-Verstärkungsvorrichtung (1) zur Anordnung zwischen Faserabschnitten (2, 3) in einem optischen Telekommunikationsnetz, umfassend: einen ersten Eingangsverstärker (4); eine Kanal-Add/Drop-Vorrichtung (7), die mit dem ersten Eingangsverstärker (4) gekoppelt ist; einen Ausgangsverstärker (8), der mit der Kanal-Add/Drop-Vorrichtung (7) gekoppelt ist, wobei der Eingangsverstärker (4) so ausgelegt ist, dass er eine im Wesentlichen konstante Ausgangsleistung erzeugt, derart dass die Ausgangsleistung von verstärktem spontanem Emissionsrauschen bei Verwendung einen Verlust von Signalleistung im Falle einer Unterbrechung eines Faserabschnitts (2) ausgleicht, um das Überleben jeglicher Kanäle zu gewährleisten, die an der Add/Drop-Vorrichtung hinzugefügt werden, **gekennzeichnet durch** einen zusätzlichen Eingangsverstärker (9), der so ausgelegt ist, dass er die ausgleichende verstärkte spontane Emission im Falle eines Ausfalls des ersten Eingangsverstärkers (4) bereitstellt.

2. Optische Add/Drop-Verstärkungsvorrichtung (1) nach Anspruch 1, wobei der zusätzliche Eingangsverstärker (9) mit dem ersten Eingangsverstärker (4) verbunden und so ausgelegt ist, dass er sich als Reaktion auf einen Ausfall des ersten Eingangsverstärkers in Gang setzt.

3. Optische Add/Drop-Verstärkungsvorrichtung (1) nach Anspruch 2, wobei der zusätzliche Eingangsverstärker (9) so ausgelegt ist, dass er sich einschaltet, wenn er keine optische Leistung vom ersten Eingangsverstärker (4) erfasst.

4. Optische Add/Drop-Verstärkungsvorrichtung (1) nach Anspruch 3, wobei eine Fotodiode (11) des zusätzlichen Eingangsverstärkers (9) so ausgelegt ist, dass sie Licht vom Überwachungsausgang (12) des ersten Eingangsverstärkers (4) wahrnimmt.

5. Optische Add/Drop-Verstärkungsvorrichtung (1) nach einem der Ansprüche 1 bis 4, wobei die Ausgangsleistung des zusätzlichen Eingangsverstärkers (9) so eingestellt ist, dass er, wenn er eingeschaltet wird, dieselbe Ausgangsleistung ausgibt wie die, die zuvor durch den ersten Eingangsverstärker (4) erzeugt wurde, und er so ausgelegt ist, dass er eine im Wesentlichen konstante Ausgangsleistung erzeugt.

6. Verfahren zum Gewährleisten des Überlebens von Kanälen, die an einer optischen Add/Drop-Verstärkungsvorrichtung hinzugefügt werden, die zwischen Faserabschnitten in einem optischen Telekommunikationssystem angeordnet ist, wobei verstärktes spontanes Emissionsrauschen, das in einem Eingangsverstärker der Verstärkungsvorrichtung erzeugt wird, verwendet wird, um einen Verlust von Signalleistung im Falle einer Unterbrechung eines Faserabschnitts auszugleichen, um das Überleben jeglicher Kanäle zu gewährleisten, die an der Add/Drop-Vorrichtung eingefügt werden, **gekennzeichnet durch** Erzeugen des ausgleichenden Rauschens in einem zusätzlichen Eingangsverstärker im Falle eines Ausfalls des Eingangsverstärkers.

7. Verfahren zum Gewährleisten des Überlebens von Kanälen nach Anspruch 6 und umfassend, dass der zusätzliche Eingangsverstärker Licht vom Überwachungsausgang des Eingangsverstärkers wahrnimmt.

## Revendications

1. Dispositif optique d'amplification à insertion/extraction (1) à disposer entre des arcs de fibre (2,3) dans un système de télécommunication optique, comprenant : un premier amplificateur d'entrée (4) ; un dispositif d'insertion/extraction de canal (7) couplé au premier amplificateur d'entrée (4) ; un amplificateur de sortie (8) couplé au dispositif d'insertion/extraction de canal (7), l'amplificateur d'entrée (4) étant agencé de manière à produire une puissance de sortie essentiellement constante, de telle sorte que la puissance de sortie du bruit d'émission spontanée amplifiée compense en utilisation une perte d'intensité de signal en cas de rupture d'un arc de fibre (2), afin de garantir la survie de tous les canaux ajoutés au niveau du dispositif d'insertion/extraction, **caractérisé par** un amplificateur d'entrée (9) additionnel qui est agencé afin de fournir l'émission spontanée amplifiée de compensation en cas de défaillance du premier amplificateur d'entrée (4).

2. Dispositif optique d'amplification à insertion/extraction (1) selon la revendication 1, dans lequel l'amplificateur d'entrée additionnel (9) est connecté au premier amplificateur d'entrée (4) et est agencé afin de fonctionner en réponse à une défaillance du premier amplificateur d'entrée.

3. Dispositif optique d'amplification à insertion/extraction (1) selon la revendication 2, dans lequel l'amplificateur d'entrée additionnel (9) est conçu afin de s'allumer lorsqu'il échoue à détecter une quelconque puissance optique provenant du premier amplificateur d'entrée (4).

4. Dispositif optique d'amplification à insertion/extraction (1) selon la revendication 3, dans lequel une photodiode (11) de l'amplificateur d'entrée additionnel est agencée afin de détecter la lumière provenant de la sortie de surveillance (12) du premier amplificateur d'entrée (4).

5. Dispositif optique d'amplification à insertion/extraction (1) selon une quelconque des revendications 1 à 4, dans lequel la puissance de sortie de l'amplificateur d'entrée additionnel (9) est réglée de telle sorte que, lorsqu'il est allumé, il donne la même puissance de sortie que celle précédemment produite par le premier amplificateur d'entrée (4) et agencée afin de produire une puissance de sortie essentiellement constante.

6. Procédé pour garantir la survie des canaux ajoutés au niveau du dispositif optique d'amplification à insertion/extraction disposé entre des arcs de fibre dans un système de télécommunication optique, dans lequel un bruit d'émission spontanée amplifiée produit dans un amplificateur d'entrée du dispositif d'amplification est utilisé pour compenser une perte d'intensité de signal en cas de rupture d'un arc de fibre, afin de garantir la survie de tous les canaux ajoutés au niveau du dispositif d'insertion/extraction, **caractérisé par** la production d'un bruit de compensation dans un amplificateur d'entrée additionnel en cas de défaillance de l'amplificateur d'entrée.

7. Procédé pour garantir la survie des canaux selon la revendication 6, et comprenant l'amplificateur d'entrée additionnel détectant la lumière provenant de la sortie de surveillance de l'amplificateur d'entrée.
